# EUROPEAN PATENT APPLICATION

(11) **EP 3 984 621 A1**
(43) Date of publication of application: **20.04.2022**
(21) Application number: 20020472.5
(22) Date of filing: 13.10.2020
(51) Int. Cl.: B01D 53/48, C01B 17/04

(54) **METHOD AND APPARATUS FOR DESULPHURISATION OF A SOUR GAS MIXTURE**

(71) Applicant: Linde GmbH, 82049 Pullach (DE)
(72) Inventor: Schreiner, Bernhard, 82041 Oberhaching (DE); Tuuva, Mika, 53850 Lappeenranta (FI)
(74) Representative: Lu, Jing

(57) **Abstract**

A method (100) for the desulphurisation of a sour gas mixture is provided, wherein the sour gas mixture is subjected to a free-flame oxidation producing a process gas containing sulphur dioxide, and wherein the process gas is at least in part subjected to a catalytic conversion converting the sulphur dioxide at least in part to elementary sulphur, the sour gas mixture being subjected to the free-flame oxidation in a first amount per time unit in a first mode of operation and in a second amount per time unit not exceeding a third of the first amount per time unit in a second mode of operation, and the free-flame oxidation being performed using an oxydant stream with an oxygen content exceeding that of atmospheric air in the first mode of operation. The free-flame oxidation is performed using the oxydant stream with the oxygen content exceeding that of atmospheric air in the second mode of operation, and heat is supplied by combusting a fuel stream other than the sour gas mixture in the second mode of operation. A corresponding apparatus is also part of the invention.

## Description

The present invention relates to a method for the desulphurisation of a sour gas mixture and to corresponding apparatus according to the precharacterising clauses of the independent claims.

### Prior art

Methods and apparatus for treating sour gas mixtures based on the Claus process are known from the prior art. Reference is e.g. made to the article "Natural Gas" in Ullmann's Encyclopedia of Industrial Chemistry, on-line publication 15 July 2006, DOI: 10.1002/14356007.a17_073.pub2, especially chapter 2.4, "Removal of Carbon Dioxide and Sulphur Components." As mentioned in more detail below, sour gas mixtures to be treated accordingly can be obtained from starting gas mixtures like natural gas or gas mixtures obtained in refinery processes.

The Claus process originally only mixed hydrogen sulphide or a corresponding sour gas mixture with oxygen and passed the mixture across a pre-heated catalyst bed. It was later modified to include a free-flame oxidation upstream the catalyst bed in a so-called Claus furnace. Most of the sulphur recovery units (SRU) in use today operate on the basis of a correspondingly modified process. If, in the following, therefore, shorthand reference is made to a "Claus process" or to a corresponding apparatus, this is intended to refer to a free-flame modified Claus process as just described.

So-called oxygen enrichment is a well-known economic and reliable method of debottlenecking existing Claus sulphur recovery units with minimal capital investment. Oxygen enrichment is, however, as described in detail below, not limited to retrofitting existing Claus sulphur recovery units but can likewise be advantageous in newly designed plants. The "term oxygen enrichment" shall, in the following, refer to any method wherein, in a Claus sulphur recovery unit or in a corresponding method, at least a part of the air introduced into the Claus furnace is substituted by oxygen or a by gas mixture which is, as compared to ambient air, enriched in oxygen or, more generally, has a higher oxygen content than ambient air.

Oxygen or oxygen enriched gas mixtures for Claus sulphur recovery units can be, in general, provided by cryogenic air separation methods and corresponding air separation units (ASU) as known from the prior art, see e.g. Haering, H.-W., "Industrial Gases Processing," Wiley-VCH, 2008, especially chapter 2.2.5, "Cryogenic Rectification." Cryogenic air separation units typically comprise a so-called warm section configured for compression, pre-cooling, drying and pre-purification of feed air, and a so-called cold section configured for heat exchange and rectification.

An object of the present invention is to provide an improved operation of a Claus process or a corresponding Claus sulphur recovery unit under turn-down conditions, as further described hereinbelow.

### Disclosure of the invention

In view of the above, the present invention provides a method for the desulphurisation of a sour gas mixture and a corresponding apparatus comprising the features of the independent claims, respectively. Preferred embodiments are subject of the dependent claims and of the description below.

The sour gas mixture may, in the present invention, particularly be obtained from a gas mixture containing hydrogen sulphide and optionally carbon dioxide and other sour gases, especially in a chemical and/or physical absorption step using an absorption liquid, particularly in a so-called amine unit. Obtaining a sour gas mixture can also form part of the invention. The desulphurisation is performed, according to the invention, in the form of a Claus process including free-flame oxidation or a variant thereof as described at the outset.

### Further background of the invention

Before specifically referring to the features and advantages of the present invention, some terms used herein will be defined and briefly explained. Furthermore, the operating principle of a Claus sulphur removal unit will be further explained.

The term "desulphurisation" as used herein shall refer to any process including conversion of a first sulphur compound comprising sulphur at a lower oxidation stage, which is contained in a sour gas mixture, to a second sulphur compound comprising sulphur at a higher oxidation stage in a first reaction step, and particularly further including forming elementary sulphur from the second sulphur compound in a second reaction step, the elementary sulphur particularly being obtained in liquid state. The first sulphur compound may be hydrogen sulphide and the second sulphur compound may be sulphur dioxide. The first reaction step may particularly include combusting the first sulphur compound and the second reaction step may particularly include using a suitable catalysis reaction as generally known for the Claus process.

In the language as used herein, a mixture of components, e.g. a gas mixture, may be rich or poor in one or more components, where the term "rich" may stand for a content of more than 75%, 80%, 85%, 90%, 95%, 99%, 99.5% or 99.9% and the term "poor" for a content of less than 25%, 20%, 15%, 10%, 5%, 1%, 0.5% or 0.1%, on a molar, weight or volume basis. In the field of sour gas treatment, a sour gas mixture with a hydrogen sulphide content of more than 80% is generally referred to as "rich" while a sour gas mixture containing less hydrogen sulphide is generally referred to as "lean." A mixture may also be, in the language as used herein, enriched or depleted in one or more components, especially when compared to another mixture, where "enriched" may stand for at least 1, 5 times, 2 times, 3 times, 5 times, 10 times or 100 times of the content in the other mixture and "depleted" for at most 0.75 times, 0.5 times, 0.25 times, 0.1 times, or 0.01 times of the content in the other mixture.

The terms "pressure level" and "temperature level" are used herein in order to express that no exact pressures but pressure ranges must be used in order to realise the present invention and advantageous embodiments thereof. Different pressure and temperature levels may lie in distinctive ranges or in ranges overlapping each other. They also cover expected and unexpected, particularly unintentional, pressure or temperature changes, e.g. inevitable pressure or temperature losses. Values expressed for pressure levels in bar units are absolute pressure values.

The term "sour gas mixture" refers, in the language as used herein, to a gas mixture containing at least hydrogen sulphide and optionally carbon dioxide and other known sour gases in an amount of at least 50%, 75%, 80% or 90% by volume, these numbers relating to the content of one of these compounds or to a common content of several ones. Further components besides sour gases may be present in a sour gas mixture as well, particularly water, hydrocarbons, benzene, toluene and xylenes (BTX), carbon monoxide, hydrogen, ammonia and mercaptans.

A sour gas mixture used as a feed for a Claus sulphur recovery unit usually originates from a sour gas sweetening plant, e.g. for sweetening natural gas or a gas from a petrochemical or oil refinery plant. The sour gas mixture, containing varying amounts of hydrogen sulphide and carbon dioxide, is saturated with water and frequently also contains small amounts of hydrocarbons and other impurities in addition to the principal components. The sour gas mixture enters a typical Claus sulphur recovery unit at about 0.5 to 1.0 barg or about 0.8 to 1.3 barg and a temperature between ambient and up to about 200 °C, if preheat measures are taken, like eg heat exchange with steam . In classical Claus sulphur recovery units, combustion air is compressed to an equivalent pressure by centrifugal blowers. Both inlet streams then flow to a burner which fires into the Claus furnace. A sour gas mixture used as a feed for a Claus sulphur recovery unit may be combined with a second stream of so-called sour water stripper gas containing hydrogen sulphide and major amounts of ammonia. It is possible to increase the Claus furnace temperature by so-called co-firing, i.e. sending fuel -typically hydrocarbons and/or hydrogen - as an additional feed stream into the furnace chamber, either directly through a dedicated nozzle or by admixing to the main sour gas feed stream.

The gas mixture from the Claus furnace, at a temperature of typically 900 °C and up to 1,450 °C, is typically cooled while generating high-pressure steam in a waste heat boiler and further cooled while producing low-pressure steam in a separate heat exchanger. This cools the hot gases to approximately 160 °C, condensing most of the sulphur which has already formed up to this point. The resultant liquid sulphur is removed in a separator section of the condenser and flows by gravity to a sulphur storage tank. Here it is kept molten, at approximately 140 °C, by steam coils. Sulphur accumulated in this reservoir is either formed to solid particles by cooling or pumped to trucks or rail cars for shipment.

Any further conversion of the sulphur gases still contained in the gas mixture from the Claus furnace is performed by catalytic reaction. The gas mixture is therefore reheated by one of several means and is then introduced to the catalyst bed. The catalytic Claus reaction releases more energy and converts more than half of the remaining sulphur gases to sulphur vapour. This vapour is condensed while generating low-pressure steam and is removed from the gas mixture. The remaining gas mixture is reheated and enters the next catalytic bed. This cycle of reheating, catalytic conversion and sulphur condensation is repeated in two to four catalytic steps. A typical Claus sulphur recovery unit comprises one free-flame reaction stage, i.e. one furnace, and two or three catalytic reaction stages. Each reaction step converts a smaller fraction of the remaining sulphur gases to sulphur vapour.

If a Claus-type sulphur recovery unit cannot meet the required low concentrations of sulfur compounds in the gas mixture obtained after the last catalytic reaction stage, i.e. in the so-called tail gas, further processing is required. This involves a so-called tail gas treatment unit (TGTU), which generally can be configured to perform dry bed processes and wet scrubbing processes. Wet scrubbing processes may include a front-end section to convert all of the sulphur compounds still contained in the tail gas back into hydrogen sulphide. After cooling, the hydrogen sulphide-containing tail gas is contacted with a solvent to remove the hydrogen sulphide, much like in a conventional gas treating plant. The solvent is then regenerated to strip out the hydrogen sulphide, which is then recycled to the thermal stage of the upstream Claus sulphur removal unit for subsequent conversion and recovery.

So-called oxygen enrichment is, as mentioned, a well-known economic and reliable method of debottlenecking existing Claus sulphur recovery units with minimal capital investment. It can also eliminate the need for fuel gas co-firing in the reaction furnace, required to maintain an adequate temperature for sufficient contaminant destruction, for example for destruction of benzene, toluene and xylenes (BTX) in the sour gas mixture. Generally, a minimum temperature is required to maintain a stable flame (above about 900 °C) and even higher temperatures of about 1,250 °C or higher are required to destroy ammonia (present in sour gas mixtures obtained in refineries). Whether or not a corresponding co-firing is required particularly depends on the hydrogen sulphide content of the sour gas mixture treated and whether a sufficient temperature and a stable flame can be obtained by burning the sour gas mixture alone. The concept of oxygen enrichment entails replacing part of the air fed to the Claus furnace by oxygen-enriched air or pure oxygen. Correspondingly, the temperature within the Claus combustion chamber rises and volumetric flow through the Claus sulphur recovery unit decreases, allowing more of the sour gas mixture to be fed to the system. This results in an increased sulphur production capacity without the need for significant modifications to existing equipment or major changes to the process plant pressure profile.

The application of oxygen enrichment is not limited to retrofitting or debottlenecking existing Claus sulphur recovery units, but can also have advantages in newly designed plants, e.g. where the acid gas mixtures fed are lean and contain benzene, toluene and xylenes. Such plants classically require feed gas and/or combustion air preheating and the use of fuel gas co-firing and have not, historically, been considered for oxygen enriched operation. However, also in such plants, the use of oxygen enriched technology results in a reduction in the physical size of all major equipment items and an associated, significant reduction in capital cost. Particularly, a large reduction in fuel requirements in co-firing in the Claus furnace and other units can be achieved and therefore more fuel, e.g. natural gas, can be used for other purposes or provided as a product of the whole plant.

A particular advantage of oxygen enrichment is, furthermore, that the tail gas downstream a tail gas treatment unit is less "diluted" with nitrogen from the combustion air classically used. If little or no additional nitrogen is introduced into the process, the main component of the sour gas mixture after desulphurisation, i.e. carbon dioxide, and other components like hydrogen can be recovered in a simpler and more cost-effective way, e.g. by cryogenic technology alone and without energy-intensive wet technology.

The term "low level oxygen enrichment" is generally used in the field for cases in which less than 28 vol.-% of oxygen are present in the free-flame oxydation, as e.g. mentioned in A.L. Kohl and R.B. Nielsen, "Gas Purification", 5th Edition, Gulf Publishing, Houston, Texas, DOI: 10.1016/B978-088415220-0/50008-2, particularly chapter 8, "Sulfur Recovery Processes". In low level oxygen enrichment, technical oxygen is injected into a supply line providing combustion air to the free-flame oxydation step of a Claus process. Claus plants originally adapted to be operated without oxygen enrichment may be adapted to implement some degree of oxygen enrichment ("revamp") in the form of low-level oxygen enrichment particularly easily. By the application of low-level oxygen-enrichment, not only the possible gas throughput can be enhanced, but also the Claus furnace temperature is increased which in turn comes with beneficial effects like e.g. better destruction of detrimental components coming with the acid gas, e.g. BTX and/or ammonia.

If oxygen accounts for more than 28 % by volume of process air, additional measures have to be taken, according to the conventional view also expressed in documents such as EP 3 276 262 A1, to introduce the oxygen into the Claus process. In this so-called "mid-level" oxygen enrichment mode oxygen is conventionally fed into the Claus furnace by one or more separate oxygen lances up to a concentration of about 45 vol.-%. If an increase of the oxygen content to even higher levels is desired, other extensive alterations to the plant design and characteristics have to be performed, as also stated in documents such as EP 3 276 262 A1. For example the oxygen can be fed by oxygen lances combined with process characteristics like staged combustion or process gas recycle. The latter correspond to the so-called "high-level" oxygen enrichment mode.

### Features and advantages of the invention

As mentioned before, the present invention is of used in connection with sour gas desulphurisation involving the Claus process.

In order to increase the Claus furnace temperature, co-firing is frequently applied, and typically applied in cases where other measures, like e.g. preheating of feed gas, are non-sufficient or not possible. Co-firing is regarded as a measure of last resort, because it causes unwanted effects like e.g. increased carbon sulphide concentrations in the Claus process gas (potentially increasing sulphur dioxide emissions). The major disadvantage of co-firing from an operational point of view is due to non-complete combustion of co-fired hydrocarbons leading to soot particles in the process gas. The latter particles precipitate as solids and thereby lead to negative effects in the Claus sections down-stream the Claus furnace:
Soot settles down, preferably on the catalyst, thus reducing the possible gas throughput (capacity reduction) and also reducing the catalyst's activity.

The more fuel being co-fired, the more soot is generated which in turn leads to ever faster build-up of the problems described. Accordingly, a minimization of the amount of co-fired fuel is a major task when trying to maximize the efficiency and reliability of a Claus plant and of corresponding processes.

Up to now, at low load operational conditions (e.g. at less than 25% of the design load) oxygen enrichment was typically not applied because the significantly reduced overall gas flow combined with higher flame velocity jeopardizes the mechanical integrity of the (tip of the) main Claus burner; i.e. when the open flame is located and burning too near to the material of the burner.

According to the present invention, oxygen enrichment and co-firing are combined at low load operational conditions. This combination allows for reaching targeted Claus furnace temperature levels (e.g. 1,250 °C, as commonly seen as minimum for sufficient ammonia destruction) with significantly less fuel amount application as compared with co-firing alone and therefore also comparably reduced build-up of soot and carbon sulphides, as carbon disulfide in particular.

Specifically, a method for the desulphurisation of a sour gas mixture is provided according to the present invention, wherein the sour gas mixture is subjected to a free-flame oxidation producing a process gas containing sulphur dioxide, and wherein the process gas is at least in part subjected to a catalytic conversion converting the sulphur dioxide at least in part to elementary sulphur, the sour gas mixture being subjected to the free-flame oxidation in a first amount per time unit in a first mode of operation and in a second amount per time unit not exceeding a third of the first amount per time unit in a second mode of operation, and the free-flame oxidation being performed using an oxydant stream with an oxygen content exceeding that of atmospheric air in the first mode of operation. The second amount per time unit can e.g. be in the range from 10 to 30 percent of the first amount per time unit. Be it understood that the time units referred to for the first and the second modes of operation are the same, the "amounts per time unit" e.g. being standard cubic meters.

According to the present invention, the free-flame oxidation is performed using the oxydant stream with the oxygen content exceeding that of atmospheric air (also) in the second mode of operation, and heat is supplied by combusting a fuel stream other than the sour gas mixture (i.e. typically hydrocarbons or hydrogen) in the second mode of operation. That is, in the second mode of operation, both an oxygen enrichment and co-firing are applied, resulting in the advantages as mentioned before. The fuel stream other than the sour gas mixture may be e.g. natural gas from which the sour gas mixture is formed.

According to the present invention, the oxydant stream may be pure oxygen or it may comprise at least 21, 25, 30, 40, 50, 60, 70, 80 or 90% of oxygen, particularly by volume. That is, the oxydant stream may be "technical" oxygen or any other stream enriched in oxygen as compared to atmospheric air. It may particularly provided using an air separation unit as mentioned. An oxygen-enrichment is generally present if a stream containing more than 20.9 vol% (which is the oxygen concentration in dry ambient air) is present.

In the present invention, at least in the first mode of operation oxygen is provided to be present in the free-flame oxidation at a concentration not exceeding 28%. That is, the present invention is particularly used in connection with low level oxygen enhancement, as explained in more detail above.

According to the present invention, the oxydant stream may be used in a first amount per time unit (according to the definition above) in the first mode of operation and in a second amount per time unit in the second mode of operation, the second amount per time unit not exceeding 50% of the first amount per time unit.

Further according to the present invention, no or less heat is supplied by combusting the fuel stream in the first mode of operation as compared to the second mode of operation. In other words, in the first mode of operation co-firing is reduced or omitted in order to avoid the problems mentioned above.

Particularly advantageously, in the first and the second mode of operation a temperature level of a gas stream formed in the free-flame oxidation is in the range from 1,000 to 1,500 °C, particularly above 1,250 °C as often the case in refineries, in order to provide for the destruction of ammonia, as mentioned.

As mentioned several times, the sour gas mixture may be formed using at least one sour gas separated from natural gas or at least one sour gas separated from product stream(s) from oil refining operations, and the second mode of operation is a turndown mode of operation, in which the sour gas mixture may be available in a smaller amount, e.g. due to the fact that a sweetening plant operates at reduced capacity.

As also mentioned, the present invention is used in connection with a Claus process, i.e. the free-flame oxidation and the catalytic conversion may be performed in process units of a process arrangement adapted to perform a Claus process.

The present invention also relates to an apparatus for performing a gas treatment method as set forth in the corresponding independent apparatus claim, which is not recited herein for reasons of conciseness.

As to specific further features and embodiments of such an apparatus, reference is made to the explanations above relating to the method according to the invention and its advantageous embodiments. This equally applies for a corresponding apparatus which is adapted to perform a corresponding method or one of its embodiments. Such an apparatus may particularly include a control unit programmed or adapted to control the units of the apparatus particularly in a turn-down mode as described.

The present invention will further be described with reference to the appended drawings which relate to a preferred embodiment of the present invention.

### Short description of the drawings

Figure 1 schematically illustrates a gas treatment method including an oxidative process for desulphurisation of a sour gas mixture in general.
Figure 2 schematically illustrates a method for the desulphurisation of a sour gas mixture according to an embodiment of the present invention.

### Detailed description of the drawings

In the Figures, functionally or technically identical or equivalent components are indicated with like reference numerals and not repeatedly explained for sake of conciseness. If explanations with regard to methods are given, these relate to the corresponding apparatus in the same manner.

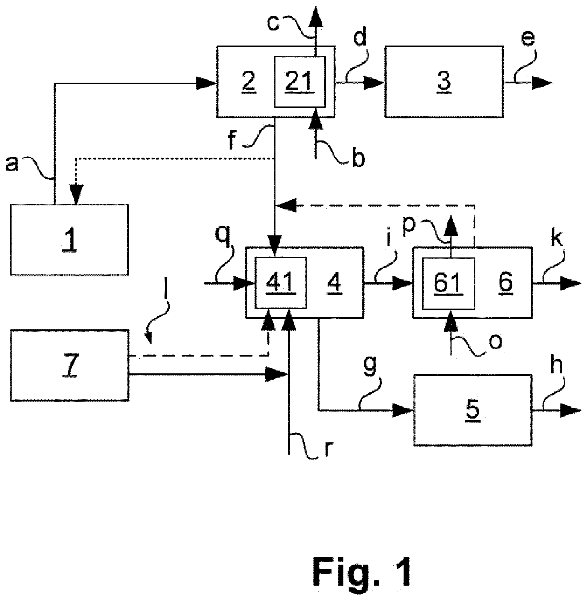

Figure 1 schematically illustrates a gas treatment method including an oxidative process 4 for desulphurisation of a sour gas mixture in general. The process is illustrated as using a gas from an air separation process and is further illustrated to include a Claus process as the oxidative process 4.

A sour natural gas stream a from a gas field 1 or a gas mixture from oil refining operations containing hydrogen sulphide is introduced into a sour gas removal unit 2, in this particular case including an amine unit 21 as mentioned before. The amine unit 21 is operated as generally known in the art, in the present example using a steam stream b which is used to heat a reboiler in the amine unit 21 (not shown). A steam stream c of a lower temperature or a condensate stream c can be formed.

A sweetened gas stream d is withdrawn from the sour gas removal unit 2 and optionally subjected to further treatment 3, providing a further treated gas stream e which can e.g. fed into a gas pipeline. A sour gas stream f is also withdrawn from the sour gas removal unit 2 and is introduced into the oxidative process 4 which is embodied as a Claus process 4, or, more specifically, into a Claus furnace 41 in the Claus process 4. Additional gas streams (not shown) may be supplied to the Claus process 4, which e.g. may be generated by a sour water stripping unit as often the case in refineries and coming with significant amounts of ammonia in the gas matrix. A part of the sour gas stream f can also be reinjected into the gas field 1, as indicated by a dotted arrow in Figure 1. A sulphur stream g is withdrawn from the Claus process 4 and is subjected to a sulphur product handling 5. From this, a sulphur product stream h is withdrawn or otherwise provided.

In a tail gas treatment unit 6, which may in all embodiments of the present invention be a unit independent from the oxidative process 4 itself or from a corresponding unit, a tail gas stream i also withdrawn from the Claus process 4 is treated in a manner known per se. The tail gas treatment unit 6 provides a purified stack gas stream k with little or no sulphur compounds. Components from the tail gas treatment unit 6 can also, as illustrated with a dashed arrow, be reintroduced into the Claus process 4 or its Claus furnace 41. The tail gas treatment unit 6 may also comprise a unit operable by heat, e.g. an amine unit 61, wherein the heat is provided in the form of steam. However, other units besides amine units may be present as well, like preheating units heating the tail gas stream i to reaction temperature, etc. A steam stream o is provided to this unit and a steam stream p of a lower temperature or a condensate stream p can be formed. One or both of the amine unit 21 in the sour gas removal unit 2 and the unit 61 in the tail gas treatment unit 6 may be provided and/or one or both of them may be operated using steam.

The Claus process 4 is operated with an oxygen-containing gas stream as oxidant which is either air only or air supplemented respectively substituted by technically generated oxygen, i.e. using oxygen enrichment, in a regular operation mode. Therefore, using respective oxygen sources 7, an oxygen-containing gas, i.e. an oxygen stream or an oxygen-enriched stream I which can be combined with an air stream from an air blower (referred to as "oxydant stream hereinbefore") is provided which is also introduced into the Claus process 4 or its furnace 41.

The oxygen source 7 can be a pipeline from a central supply grid, a dedicated oxygen production unit such as a cryogenic air separation unit or a vacuum pressure swing adsorption (VPSA) installation may be based on a tank installation filled with liquified oxygen combined with a subsequent vaporizer unit. As shown in the form of a dashed arrow, stream I may either be provided to the furnace 41 separately from an air stream r, such as from an air blower (not shown) or may be admixed thereto, as shown in the form of a solid arrow. While the former is typical for so-called mid or high level oxygen enrichment (in which oxygen contents of more than 28% are used), the latter is typically performed in the case of so-called low level oxygen enrichment and particularly perfomed in the case of the present invention.

For co-firing, a fuel gas stream q can also be supplied to the Claus process 4 or more precisely its furnace 41. A control unit 10 is adapted to provide control instructions.

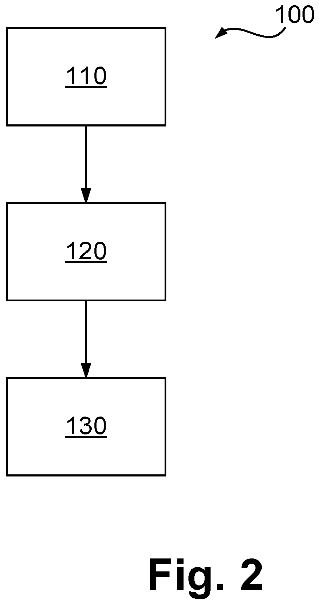

Figure 2 schematically illustrates a method 100 for the desulphurisation of a sour gas mixture according to an embodiment of the present invention.

In a method step 110 of the method 100, a first mode of operation is performed which is an operation mode in which a corresponding apparatus is run at full or design capacity. In a method step 130 of the method 100, a second mode of operation is performed which is an operation mode in which a corresponding apparatus is run in a turn-down mode at reduced capacity.

In both method steps 110 and 130 of the method 100, which correspond to certain time periods of some extent, respectively, a sour gas mixture is subjected to a free-flame oxidation producing a process gas containing sulphur dioxide, and the process gas is at least in part subjected to a catalytic conversion converting the sulphur dioxide at least in part to elementary sulphur.

In the first mode of operation, i.e. the method step 110, the sour gas mixture is subjected to the free-flame oxidation in a first amount per time unit in a first mode of operation and in the second mode of operation, i.e. the method step 130, the sour gas mixture is subjected to the free-flame oxidation in a second amount per time unit not exceeding a third of the first amount per time unit.

In both the first and the second method steps 110 and 130, the free-flame oxidation is performed using an oxydant stream with an oxygen content exceeding that of atmospheric air, and in the second method step 130, heat is supplied by combusting a fuel stream other than the sour gas mixture in the second mode of operation.

For example as instructed by a control unit 10 as shown in Figure 1, in a method step 120 a switching between the first and second operation modes performed in method steps 110 and 130 is initiated. This involves that a fuel stream is started to be provided and that particularly an amount per time unit of the oxydant stream is reduced. Wile not explicitly shown, also a switching back to the first and operation mode may be performed, wherein the measures mentioned are reverted.

## Claims

1. A method (100) for the desulphurisation of a sour gas mixture, wherein the sour gas mixture is subjected to a free-flame oxidation producing a process gas containing sulphur dioxide and hydrogen sulphide, and wherein the process gas is at least in part subjected to a catalytic conversion converting the sulphur dioxide at least in part to elementary sulphur by reaction with at least a part of the hydrogen sulphide, the sour gas mixture being subjected to the free-flame oxidation in a first amount per time unit in a first mode of operation and in a second amount per time unit not exceeding a third of the first amount per time unit in a second mode of operation, and the free-flame oxidation being performed using an oxydant stream with an oxygen content exceeding that of atmospheric air in the first mode of operation, **characterized in that** the free-flame oxidation is performed using the oxydant stream with the oxygen content exceeding that of atmospheric air in the second mode of operation, and **in that** additional heat is supplied by combusting a fuel stream other than the sour gas mixture in the second mode of operation.

2. The method (100) according to claim 1, wherein the oxydant stream is pure oxygen or comprises at least 21, 30, 40, 50, 60, 70, 80 or 90% of oxygen.

3. The method (100) according to claim 1 or 2, wherein at least in the first mode of operation oxygen is provided to be present in the free-flame oxidation at a concentration not exceeding 28%.

4. The method (100) according to any one of the preceding claims, wherein the oxydant stream is used in a first amount per time unit in the first mode of operation and in a second amount per time unit in the second mode of operation, the second amount per time unit not exceeding 50% of the first amount per time unit.

5. The method (100) according to any one of the preceding claims, wherein no or less heat is supplied by combusting the fuel stream in the first mode of operation as compared to the second mode of operation.

6. The method (100) according to any one of the preceding claims, wherein in the first and the second mode of operation a temperature level of a gas stream formed in the free-flame oxidation is 1.000 to 1.500 °C.

7. The method (100) according to any one of the preceding claims, wherein the sour gas mixture is formed using at least one sour gas separated from natural gas or at least one product stream containing hydrogen sulphide gained by oil refining.

8. The method (100) according to any one of the preceding claims, wherein the second mode of operation is a turndown mode of operation.

9. The method (100) according to any one of the preceding claims, wherein the free-flame oxidation and the catalytic conversion are performed in process units of a process arrangement adapted to perform a Claus process.

10. Apparatus for the desulphurisation of a sour gas mixture, the apparatus being adapted to subject the sour gas mixture to a free-flame oxidation producing a process gas containing sulphur dioxide, and the apparatus being adapted to subject the process gas at least in part to a catalytic conversion converting the sulphur dioxide at least in part to elementary sulphur, the apparatus being further adapted to subject the sour gas mixture to the free-flame oxidation in a first amount per time unit in a first mode of operation and in a second amount per time unit not exceeding a third of the first amount per time unit in a second mode of operation, and to perform the free-flame oxidation using an oxydant stream with an oxygen content exceeding that of atmospheric air in the first mode of operation, **characterized in that** the apparatus is adapted to perform the free-flame oxidation using the oxydant stream with the oxygen content exceeding that of atmospheric air in the second mode of operation, and to supply heat by combusting a fuel stream other than the sour gas mixture in the second mode of operation.

11. The apparatus according to claim 10, comprising a control unit (10) adapted to provide control instructions resulting in the apparatus being operated in the first operation mode and the second operation mode.

12. Apparatus according to claim 10 or 11, comprising means adapted to perform a method according to any one of claims 1 to 9.
